# EUROPÄISCHE PATENTANMELDUNG

(11) **EP 3 943 455 A1**
(43) Veröffentlichungstag der Anmeldung: **26.01.2022**
(21) Anmeldenummer: 20187166.2
(22) Anmeldetag: 22.07.2020
(51) Int. Cl.: C02F 3/04, C02F 3/10, C02F 1/52, C02F 1/66, C02F 3/32

(54) **VERRIESELUNGSVORRICHTUNG**

(71) Anmelder: ATB Technology GmbH, 32457 Porta Westfalica (DE)
(72) Erfinder: Baumann, Markus, 10119 Berlin (DE)
(74) Vertreter: Ter Meer Steinmeister & Partner

(57) **Zusammenfassung**

Die Erfindung betrifft eine Verrieselungsvorrichtung (10) für Wasser, umfassend mindestens einen Behälter (12), der einen Tropfkörper (14) enthält, der eine Schüttung (17) umfasst, die eine Vielzahl von Tropfkörperelementen (16, 16a, 16b, 16c) enthält, wobei die Schüttung (17) Tropfkörperelemente (16, 16a, 16b, 16c) enthält, die als zumindest einseitig offene Gefäße ausgebildet sind.

## Beschreibung

Die vorliegende Erfindung betrifft eine Verrieselungsvorrichtung gemäß dem Oberbegriff des Anspruchs 1.

Verrieselung von Wasser und Abwasser ist eine bekannte Technik, welche zur Abwasserreinigung eingesetzt wird. Dabei wird das Wasser im Falle einer Abwassereinigung durch in der Vorrichtung aufgewachsene sessile Mikroorganismen biologisch gereinigt.

Verrieselungsvorrichtungen umfassen einen Tropfkörper, der mit einem Tropfkörpermaterial gefüllt ist, über welches das Wasser verrieselt wird und den es langsam durchtropft. Fest-und Schmutzstoffe lagern sich dabei an das Füllmaterial an und werden mikrobiell adsorbiert und abgebaut. Dabei ist es erforderlich, die Durchflussgeschwindigkeit des Wassers zu verlangsamen, um eine möglichst effektive Abwasserreinigung zu ermöglichen und die Ansiedlung von sessilen Mikroorganismen und Bildung von biologisch aktiven Biofilmen zu verbessern. Insbesondere für Anlagen, bei denen die Verrieselung nur in Intervallen stattfindet, ist dies von existentieller Bedeutung für die Funktion, da ein längeres Trockenfallen der Tropfkörper die Besiedelung mit Mikroorganismen und damit die Reinigungsleistung stark verschlechtert. Allerdings darf auch nicht zu viel Wasser im Tropfkörper verbleiben, bzw. die Durchflussgeschwindigkeit darf nicht zu langsam sein, um einen ausreichenden Wasserdurchsatz zu gewährleisten.

Bekannte Tropfkörper sind mit speziellen Tropfkörperelementen gefüllt, so zeigen die Dokumente DE 33 17 697 C1, DE 35 22 241 A1 und EP 0 718 240 A1 Füllungen, die aus speziell angefertigten Rohren mit Einbuchtungen oder speziell profilierter Oberfläche bestehen. Diese erfordern nicht nur eine aufwändige und kostenintensive Anfertigung dieser Elemente, sie ermöglichen darüber hinaus durch ihre senkrechte Anordnung nicht, die Durchflussgeschwindigkeit ausreichend zu verlangsamen, um eine effektive Abwasserreinigung zu ermöglichen und ein Trockenfallen zu verhindern. Auch der Wasserdurchsatz lässt hierbei nicht flexibel auf die Einsatzsituation anpassen. Weiterhin müssen die Füllungen an die jeweilige Tropfkörperform und -größe angepasst sein, was die Flexibilität der Einsatzmöglichkeiten verringert.

Eine flexiblere Lösung dafür zeigt beispielsweise Dokument DE 23 29 279 A1, bei dem eine Schüttung aus Lavasteinen die Tropfkörperelemente bildet. Dies bietet ebenfalls eine verlangsamte Durchflussgeschwindigkeit, allerdings lässt sie sich nicht ausreichend einstellen, der Wasserdurchsatz ist hierbei ebenfalls nicht einstellbar.

Darüber hinaus ist für den Einsatz, insbesondere in urbanen Lebensräumen ein Klimatisierungseffekt der Verrieselungsvorrichtung, insbesondere zur Kühlung erwünscht. Eine Kühlung zur Klimaregulation geschieht durch entstehende Verdunstungskälte, ein Effekt, der durch auf der Vorrichtung aufgewachsene Pflanzen verstärkt werden kann. Bei beiden Einsatzgebieten, der Abwasserreinigung und der Klimaregulation, ist eine möglichst große Oberfläche der Vorrichtung von Vorteil. Beim Stand der Technik tritt der Kühlungseffekt nur als Nebeneffekt auf und ist nicht ausreichend zur Herstellung eines Mikroklimas.

Ebenfalls erwünscht ist eine Funktion als Wasserrückhalteelement. Hierbei muss die Vorrichtung ebenfalls in der Lage sein, für einen Zeitraum ein Wasservolumen zu speichern, um zum Beispiel ein größeres Volumen Regenwasser oder ein Abwasservolumen zur Nachklärung abzupuffern. Dies ist mit den bekannten Vorrichtungen nicht ausreichend möglich.

Es ist daher Aufgabe der vorliegenden Erfindung, einen Verrieselungsvorrichtung der vorher genannten Art zu schaffen, mit einer Tropfkörperfüllung aus einem günstigen und flexibel einsetzbaren Material sowie guten Wasserrückhalteeigenschaften des Tropfkörpers und einer effektiven Klimaregulationsfunktion.

Diese Aufgabe wird erfindungsgemäß durch eine Verrieselungsvorrichtung mit den Merkmalen des Anspruchs 1 gelöst. Weitere vorteilhafte Ausgestaltungen ergeben sich aus den Unteransprüchen.

Erfindungsgemäß umfasst die Verrieselungsvorrichtung mindestens einen Behälter, der einen Tropfkörper enthält, der eine Schüttung umfasst, die eine Vielzahl von Tropfkörperelementen enthält, wobei die Schüttung Tropfkörperelemente enthält, die als zumindest einseitig offene Gefäße ausgebildet sind.

Diese Ausführung der Verrieselungsvorrichtung weist bedeutende Vorteile gegenüber dem Stand der Technik auf.

Die Schüttung der Tropfkörper erzeugt eine zufällige Verteilung und Ausrichtung der Tropfkörperelemente, wodurch zumindest ein Teil derselben so orientiert ist, dass durch den Tropfkörper strömendes Wasser in die als zumindest einseitig offene Gefäße einströmt und dort zurückgehalten wird. Die Tropfkörperelemente, beziehungsweise ihre Volumina, bilden daher ein Rückhaltevolumen oder eine Rückhaltekapazität des Tropfkörpers. Dies erzeugt bedeutende Vorteile gegenüber dem Stand der Technik.

So verdunstet das in den Elementen zurückgehaltene Wasser über einen längeren Zeitraum als auf den anderen nur benetzten Oberflächen, da die Oberfläche der Volumina im Verhältnis zu ihrem Volumen wesentlich geringer ist.

Bei Verwendung der erfindungsgemäßen Vorrichtung zur Abwasserreinigung ermöglicht dies die Überlebensdauer der Mikroorganismen und damit die Funktionalität des Bakterienrasens in Phasen der Trockenheit ohne Wasserzufluss in die Verrieselungsvorrichtung zu erhalten, wodurch eine stark verbesserte Funktionalität der Vorrichtung nach diesen Phasen erreicht wird. Auch können sich im zurückgehaltenen Wasser Mikroorganismen ansiedeln, die größere Wasservolumina als eine benetzte Oberfläche benötigen, wodurch die biologische Abwasserreinigung weiter verbessert wird.

Darüber hinaus lässt sich die erfindungsgemäße Verrieselungsvorrichtung als Wasserrückhalteelement einsetzen. Durch die langsame Durchströmgeschwindigkeit kann ein Wasservolumen, zum Beispiel von einem Regenschauer, gepuffert und langsamer an die Weiterleitungselemente abgegeben werden, als dies im Stand der Technik der Fall wäre. Dies wird insbesondere durch das von den Tropfkörperelementen gebildete Rückhaltevolumen verbessert. So kann die Vorrichtung beispielsweise auch zur Entlastung des Abwassersystems von urbanen Gebieten bei Regenschauern eingesetzt werden, wo insbesondere bei Starkregenereignissen ein verlangsamter Zufluss des Regenwassers in das Abwassersystem von Vorteil ist. Auch bei einem Einsatz als Nachklärelement kann ein intervallartiger Zufluss abgepuffert und verlangsamt weitergeleitet werden.

Die Wasserrückhaltekapazität und die dadurch verlangsamte Verdunstung verbessert darüber hinaus die Effektivität der Verrieselungsvorrichtung bei einem Einsatz als Kühlelement. Das zurückgehaltene Wasser verdunstet langsamer und entzieht der Vorrichtung und der Umgebungsluft dadurch über einen verlängerten Zeitraum Wärme, wodurch die Kühlleistung verlängert wird. So kann die erfindungsgemäße Vorrichtung beispielsweise genutzt werden, um urbane Lebensräume zu kühlen und dafür insbesondere anfallendes Regenwasser und anderes Brauchwasser wie etwa Grauwasser verrieseln.

Darüber hinaus kann durch die Verwendung einer Schüttung im Behälter die Aufenthaltszeit des Wassers als auch die Filterwirkung durch Unterschiede in der Schüttdichte dem jeweiligen Einsatzzweck angepasst werden, was die Einsatzmöglichkeiten der Verrieselungsvorrichtung stark erhöht.

Gemäß einer weiteren bevorzugten Ausführungsform sind die Tropfkörperelement becherförmig oder schalenförmig ausgeführt. Durch diese Ausführungsform sind die Öffnungen der Tropfkörperelemente in einer Schüttung zu einem hohen Prozentsatz derart angeordnet, dass zumindest ein Teil des jeweiligen Becher- oder Schalenvolumens zur Rückhaltung und Zwischenspeicherung von Wasser genutzt werden kann. Die Herstellung solch geformter Elemente ist technisch einfach und kostengünstig, so können diese beispielsweise durch Tiefziehen eines geeigneten Materials hergestellt werden. Auch durch die Verwendung von Recyclingmaterialien zur Tropfkörperelementherstellung oder als Tropfkörperelemente können Kosten eingespart und die Produktion vereinfacht werden.

Gemäß einer weiteren bevorzugten Ausführungsform der Erfindung sind die Tropfkörperelemente Flaschendeckel. Durch die Verwendung von Flaschendeckeln wird der Produktionsprozess der Verrieselungsvorrichtung stark vereinfacht. So weisen diese ein vorteilhaftes Verhältnis von Volumen und Oberfläche auf, wodurch ein ideales Verhältnis von Tropfkörperoberfläche und -volumen erreicht wird. Darüber hinaus sind Flaschendeckel, insbesondere bei Verwendung von recycelten Deckeln ein regional überall verfügbares und günstiges Material, das die Produktionskosten und den Montageaufwand stark senkt. Hierbei können Flaschendeckel jeglicher Art entweder einzeln oder in verschiedensten Mischungen verwendet werden.

Gemäß einer weiteren bevorzugten Ausführungsform weisen die Tropfkörperelemente einen Durchmesser zwischen 15 und 60 mm und/oder eine Höhe zwischen 5 und 40 mm auf.

Weiter bevorzugt sind die Tropfkörperelemente rotationssymmetrisch, beispielsweise zylindrisch ausgebildet. Weiter bevorzugt weisen sie einen Zylinderdurchmesser zwischen 20 und 40 mm und/oder eine Höhe zwischen 10 und 30 mm auf.

Nach einer alternativen Ausführungsform weisen die Tropfkörperelemente einen Durchmesser zwischen 28 und 35 mm und/oder eine Höhe zwischen 13 und 25 mm auf. Auch hier können die Tropfkörperelemente beispielsweise rotationssymmetrisch, insbesondere zylindrisch ausgebildet sein.

Gemäß einer weiteren bevorzugten Ausführungsform weisen die Tropfkörperelemente eine zumindest einseitig profilierte Außenseite auf. Diese Profilierung vergrößert die Oberfläche der Tropfkörperbehälter und kann, je nach verwendetem Tropfkörpermaterial, unterschiedlich stark ausgebildet sein. Die vergrößerte Oberfläche stellt einen ebenfalls vergrößerten Lebensraum für sessile Mikroorganismen dar, was die Filterwirkung und Abwasserreinigung der Vorrichtung verbessert. Dabei kann die Profilierung beispielsweise eine vorhandene Profilierung der als Tropfkörperbehälter verwendeten Flaschendeckeln sein. Weiterhin wird durch die vergrößerte Oberfläche das Wasservolumen, welches die Tropfkörperelemente benetzt, erhöht. Dies hat einen erhöhten Kühlungseffekt bei Verdunstung dieses Wassers zur Folge.

Weiter bevorzugt weisen die Tropfkörperelemente eine zumindest einseitig profilierte Innenseite auf. Diese Profilierung vergrößert ebenfalls die Oberfläche der Tropfkörperbehälter und kann je nach verwendetem Tropfkörpermaterial unterschiedlich stark ausgebildet sein. Dabei kann die Profilierung beispielsweise die vorhandene Profilierung von als Tropfkörperbehälter verwendeten Flaschendeckeln sein. Weiterhin kann die Profilierung durch die in den Flaschendeckeln ausgeformten Gewinde gebildet werden.

Gemäß einer weiteren bevorzugten Ausführungsform umfasst der Behälter auf seiner Außenseite eine Anzahl von Pflanzenträgern. Diese dienen zur Bepflanzung mit standortspezifischen und an die Funktion angepassten Pflanzen und somit zur Begrünung des Behälters. Hierbei können die Pflanzenträger mit dem Tropfkörper in Verbindung stehen, wodurch die Pflanzen Zugang zu dem den Tropfkörper durchströmenden Wasservolumen haben und beispielsweise mit ihren Wurzeln in den Tropfkörper einwachsen können. Auch kann ein Wasser- oder Abwasservolumen auf oder durch die Pflanzenträger hindurch verrieselt werden.

Diese Bepflanzung kann verschiedenen Zwecken dienen, die beliebig miteinander kombiniert werden können. So kann eine Bepflanzung des Behälters nur einen optischen Zweck zur verbesserten Optik der Vorrichtung oder der optischen Angleichung mit der Umgebung der Verrieselungsvorrichtung dienen. Dies ermöglicht beispielsweise die Verwendung erfindungsgemäßer Vorrichtungen in Gärten oder an öffentlichen Orten im urbanen Umfeld. Weiterhin kann es sich bei den Pflanzen beispielsweise um Duftpflanzen handeln, wie etwa Lavendel oder dergleichen. Ebenso denkbar ist eine Bepflanzung mit Nutzpflanzen, wie etwa Obst- und/oder Gemüsepflanzen und geeigneten Sorten.

Weiterhin können die Pflanzenträger genutzt werden, um durch die darin angeordneten Pflanzen eine Abwasserreinigung zu ermöglichen. Hierbei wird ein Abwasservolumen durch die Pflanzenträger geleitet, wobei durch die Pflanzen eine biologische Abwasserreinigung stattfindet. Bei Verbindung der Pflanzenträger mit dem Tropfkörper kann auch das durch den Tropfkörper strömende Abwasservolumen gereinigt werden. Dies ist insbesondere in Verbindung mit der zuvor beschriebenen Abwasserreinigung durch sessile Mikroorganismen im Tropfkörper von Vorteil, da so die zu erzielende Reinigungsleistung verbessert wird.

Darüber hinaus können die Pflanzenträger genutzt werden, um durch die darin angeordneten Pflanzen eine erhöhte Kühlleistung der Verrieselungsvorrichtung zu ermöglichen. Die pflanzenphysiologischen Eigenschaften der in den Pflanzenträgern angeordneten Pflanzen und die dadurch erhöhte Oberfläche der Vorrichtung bedingen eine erhöhte Verdunstungsrate und damit eine verbesserte Kühlleistung. So verdunstet nicht nur auf der Oberfläche verrieseltes Wasser, sondern auch durch die Pflanzen aufgenommenes Wasser.

Zusätzlich haben die Pflanzen den Vorteil einer Dämmwirkung im Winter, wodurch beispielsweise ein Einfrieren des im Tropfkörper vorhanden Wassers verhindert wird, darüber hinaus weist eine bepflanzte Verrieselungsvorrichtung selbst eine erhöhte Dämmwirkung auf. Ebenfalls dient eine Bepflanzung der Pflanzenträger zur Luftreinhaltung, die Pflanzen sind eine Sauerstoffquelle und ein effektiver Binder von Feinstaub, ein Effekt, der insbesondere in urbanen Gebieten von großem Vorteil ist.

Gemäß einer weiteren bevorzugten Ausführungsform umfassen die Pflanzenträger zumindest eine Pflanzmatte und/oder eine Anzahl von Aufnahmen für Pflanzsubstrate. Pflanzmatten bieten eine kostengünstige und einfach zu montierende Lösung, die einen flächigen Bewuchs der Matten und dadurch beispielsweise auch des gesamten Behälters ermöglicht.

Hierbei sind die Pflanzmatten in der Lage, Wasser lange zu speichern und damit einen Bewuchs mit verschiedensten Pflanzenarten zu ermöglichen. Solche Pflanzmatten können beispielsweise aus Hanf, Jute, Holzfasern oder anderen Materialien gefertigt sein. Dabei können auch Recycling- und Abfallprodukte zum Einsatz kommen. Aufnahmen für Pflanzsubstrate können entweder in die Wand des Behälters eingelassen sein oder auf dieser angeordnet werden. Dabei können diese Aufnahmen beispielsweise taschen-, becher-, kästen- oder schalenförmig ausgeführt sein und aus den verschiedensten geeigneten Materialien bestehen.

Gemäß einer weiteren bevorzugten Ausführungsform umfasst die Verrieselungsvorrichtung Mittel zur Beschickung des Behälters mit einem Wasservolumen. Diese Mittel können beispielsweise einen Verteiler zur gleichmäßigen Verteilung des Wasservolumens über den Behälter oder Tropfkörper umfassen. Weiterhin können diese Mittel eine Zuleitung umfassen, die beispielsweise an eine Pumpe und/oder eine bestehende Wasser- oder Abwasserleitung angeschlossen ist und den Verteiler mit dieser verbindet. Die Mittel können hierbei auch in oder an der Vorrichtung angeordnet sein.

Weiter bevorzugt umfassen die Mittel zur Beschickung des Behälters eine Pumpe und eine Photovoltaikanlage. Hierbei besteht die Möglichkeit, die Pumpe ausschließlich durch die Photovoltaikanlage zu betreiben, was einen autarken Einsatz der Vorrichtung möglich macht und das Einsatzspektrum erweitert.

Ebenfalls weiter bevorzugt sind die Mittel zur Beschickung des Behälters in diesem angeordnet. Dies ermöglicht eine witterungs- und manipulationsbeständige Ausführung der Beschickungsmittel und verbessert darüber hinaus die Optik der Vorrichtung.

Gemäß einer weiteren bevorzugten Ausführungsform der Erfindung umfasst die Vorrichtung einen Verteiler, der ausgeführt ist, um die Beschickung des Behälters zwischen dem Tropfkörper und dem oder den Pflanzenträgern aufzuteilen. So kann je nach Bedarf und Einsatzsituation die Bewässerung angepasst werden. So kann der Verteiler zum Beispiel einen Sprühverteiler zu Verrieselung von Wasser über den Tropfkörper und/oder die Pflanzenträger umfassen.

Weiter bevorzugt umfasst der Verteiler, der ausgeführt ist, um die Beschickung des Behälters zwischen dem Tropfkörper und den Pflanzenträgern aufzuteilen, einen im Behälter angeordneten Überlauf zur Beschickung der Pflanzenträger. Dieser Überlauf ermöglicht die Beschickung mit einem Wasservolumen durch einen raumbegrenzten Zulauf, zum Beispiel in Form eines Rohrendes. Erst wenn der Überlauf voll ist und überläuft, werden die Pflanzenträger gleichmäßig beschickt. Dies verringert Herstellungs- und Montagekosten weiter.

Gemäß einer weiteren bevorzugten Ausführungsform umfassen die Mittel zur Beschickung des Behälters Rezirkulationsmittel, die ausgeführt sind, um eine Rezirkulation des Wasservolumens durch den Behälter zu ermöglichen. Eine solche Rezirkulation kann verschiedenen Zwecken dienen. So kann bei Verwendung der Vorrichtung zur Abwasserreinigung eine Rezirkulation die Sauberkeit des Abwassers stark verbessern und dadurch die Reinigungsleistung der Vorrichtung erhöhen. Auch kann ein Trockenfallen des Tropfkörpers in Phasen ohne Wasserzufluss verhindert werden und damit der Abbau des Bakterienrasens auf den Tropfkörperelementen verhindert werden. Bei Einsatz der Vorrichtung zur Kühlung erhöht eine Rezirkulation des vorhandenen Wasservolumens die Verdunstungsrate und damit die Kühlleistung der Vorrichtung.

Gemäß einer weiteren bevorzugten Ausführungsform umfasst die Schüttung Zusatzstoffe. Diese können beispielsweise Füllmaterialien umfassen, welche die Schüttdichte und/oder das Gewicht der Schüttung beeinflussen. Mit Hilfe solcher Zusatzstoffe lässt sich die Effektivität der verschiedenen mit der Vorrichtung erzielbaren Effekte auf die jeweilige Einsatzsituation anpassen und verbessern. Darüber hinaus können die Zusatzstoffe aktive Materialien sein. Zum Beispiel ist Kalkstein zur Anhebung des pH-Werts geeignet.

Gemäß einer weiteren bevorzugten Ausführungsform umfasst die Schüttung Zusatzstoffe, die durch Oxidation Metallionen freisetzen. Die Abgabe der Metallionen (z.B. Eisen oder Aluminium) wird durch die natürliche Oxidation des Metalls im Wasser erzielt. Durch die Abgabe der Ionen in Wasser bilden sich chemische Verbindungen, die ein Ausfällen des Phosphats aus dem Wasser bewirken. Weiterhin wird durch diesen Prozess eine zusätzliche Ausfällung bzw. Koagulation von weiteren in Schwebe befindlichen Wasserinhaltsstoffen erzielt. Hiermit kann bei Verwendung der Verrieselungsvorrichtung zur Abwasserbehandlung eine Phosphatreinigung des Abwassers durchgeführt werden. Die Zusatzstoffe umfassen beispielsweise Eisen- oder Aluminiumspäne, deren Größe und Menge je nach verwendeten Tropfkörperelementen und Einsatzzweck gewählt wird. Hierbei können sowohl Recyclingmaterialien als auch ortspezifisch verfügbare Materialien eingesetzt werden, was Kosten und Aufwand weiter verringert.

Gemäß einer weiteren bevorzugten Ausführungsform ist der Behälter säulenförmig. Solch säulenförmige Ausführungen ermöglichen eine einfache und kostengünstige Konstruktion und haben weiterhin ein vorteilhaftes Verhältnis von Volumen und Oberfläche, was unter anderem Materialkosten senkt. Beispielsweise ist die Form der Säule zylindrisch ausgebildet. Andere Säulenquerschnitte, z.B. quadratische oder dreieckige Querschnitte, sind ebenfalls denkbar. Die Säule kann modular aufgebaut sein und z.B. aus übereinander gestapelten Segmenten bestehen. Diese einzelnen Segmente können identisch ausgebildet sein.

Nach einer weiteren Ausführungsform umfassen der Behälter und/oder der Tropfkörper Mittel zur passiven und/oder aktiven Belüftung. Zur passiven Belüftung können der Behälter und/oder der Tropfkörper mit Belüftungsöffnungen versehen sein. Diese können beispielsweise am unteren und oberen Ende des Behälters und/oder des Tropfkörpers angeordnet sein. Mittel zur aktiven Belüftung umfassen zum Beispiel Lüfter, welche ebenfalls am unteren und oberen Ende des Behälters und/oder des Tropfkörpers angeordnet sein können. Durch die Belüftungsmittel kann ein Luftstrom im Inneren des Behälters und des Tropfkörpers erzeugt werden. Dieser sorgt für eine ausreichende Sauerstoffzufuhr für Oxidationsprozesse in der Abwasserreinigung und eine hohe Verdunstungsrate für die Klimaregulation. Außerdem ermöglicht ein Luftstrom durch den Tropfkörper die effektive Bindung von Feinstaub durch Anlagerung an die Tropfkörperelemente, was insbesondere zur Luftreinigung in urbanen Gebieten von Vorteil ist. Ein solcher Luftstrom kann eventuell auch ohne zusätzliche Belüftungsmittel selbstständig erzeugt werden, etwa durch einen Kamineffekt, der aufgrund der thermischen Verhältnisse im Behälter entsteht.

Nach einer weiteren Ausführungsform der Erfindung ist die Vorrichtung modular ausgeführt. Hierbei kann eine Verrieselungsvorrichtung aus einem oder mehreren Behältern mit verschiedensten Formen und Größen bestehen, welche auch unterschiedliche der zuvor beschriebenen Funktionen einnehmen können. So kann eine Vorrichtung beispielsweise aus einem oder mehreren quader- oder wandförmigen Behältern bestehen.

Nach einer weiteren Ausführungsform umfasst die Verrieselungsvorrichtung auf ihrer Außenseite Flächen und oder Aufnahmen. Diese können beispielsweise Flächen für Werbung und Informationsweitergabe und/oder Befestigungen und Aufnahmen für Beleuchtungs-oder Überwachungstechnik sein.

Gemäß einer weiteren bevorzugten Ausführungsform umfasst die Erfindung eine Klärvorrichtung zur Reinigung eines Abwasservolumens, umfassend Einrichtungen zur Förderung oder Behandlung des Abwassers, mindestens eine vorgeschalteten Klärstufe und eine nachgeschaltete Klärstufe, wobei die nachgeschaltete Klärstufe eine Verrieselungsvorrichtung nach einer der zuvor genannten Ausführungsformen ist. Hierbei dient die erfindungsgemäße Vorrichtung zur Nachbehandlung von vorgereinigtem Abwasser. Die Vorrichtung kann entweder als zusätzliche Klärstufe in bereits bestehende Anlagen integriert werden oder in neu zu errichtende integriert werden.

Gemäß einer weiteren Ausführungsform ist die Vorrichtung zur Beschickung aus einem an die Vorrichtung angeschlossenen Gewässer wie einem Fluss oder Teich geschehen. Hierbei kann zum Beispiel entweder das Gewässer zur Kühlung der Umgebung durch Verdunstung von Wasser in der Vorrichtung genutzt werden und/oder, wie es kann, etwa bei Anschluss an einen Gartenteich, das Gewässer gereinigt werden.

Gemäß einer weiteren Ausführungsform umfasst die Verrieselungsvorrichtung Mittel oder Einrichtungen zur Reinigung und Regeneration des Behälters. Diese Mittel können vorzugsweise als Druckspülung ausgeführt sein. Bei Einsatz zur Abwasserreinigung werden durch die sessilen Mikroorganismen und Fällungsprozesse verschiedene Inhaltsstoffe aus dem Abwasser ausgefällt und verbleiben in der Vorrichtung. Darüber hinaus setzen sich in den Volumina der Tropfkörperelemente weitere Schwebstoffe ab, wodurch die Abwasserreinigungsleistung und das Rückhaltevolumen auf Dauer verringert werden. Reinigungseinrichtungen erlauben beispielsweise eine Druckspülung des Tropfkörpers und/oder der Pflanzenträger, wodurch mindestens ein Teil der abgelagerten Stoffe gelöst und aus der Vorrichtung ausgespült werden. Dabei ist es insbesondere von Vorteil, nach der Druckspülung wieder einen Teil des zur Spülung genutzten Wasservolumens durch die Beschickungs- oder Rezirkulationsmittel dem Tropfkörper und/oder den Pflanzenträgern zuzuführen. Hierbei werden durch die Druckspülung gelöste Mikroorganismen wieder in den Behälter eingebracht und die Besiedlung der Tropfkörperelemente sichergestellt.

Im Folgenden werden bevorzugte Ausführungsformen der Erfindung anhand der Zeichnungen dargestellt.
- Fig.1a: zeigt einen schematischen vertikalen Schnitt durch eine erste Ausführungsform der Verrieselungsvorrichtung gemäß der vorliegenden Erfindung;
- Fig.1b: ist eine vergrößerte schematischen Darstellung der Schüttung innerhalb des Tropfkörpers der Verrieselungsvorrichtung aus Fig. 1a;
- Fig.2a und 2b: zeigt einen schematischen vertikalen Schnitt durch eine erste Ausführungsform der Verrieselungsvorrichtung gemäß der vorliegenden Erfindung;
- Fig.3 bis 5: zeigen Detailansichten von Verrieselungsvorrichtungen als Ausführungsformen der vorliegenden Erfindung;
- Fig. 6: zeigt Beispiele der erfindungsgemäßen Tropfkörperelemente;
- Fig.7 bis 10: zeigen Beispiele für Einsatzmöglichkeiten der Erfindung.

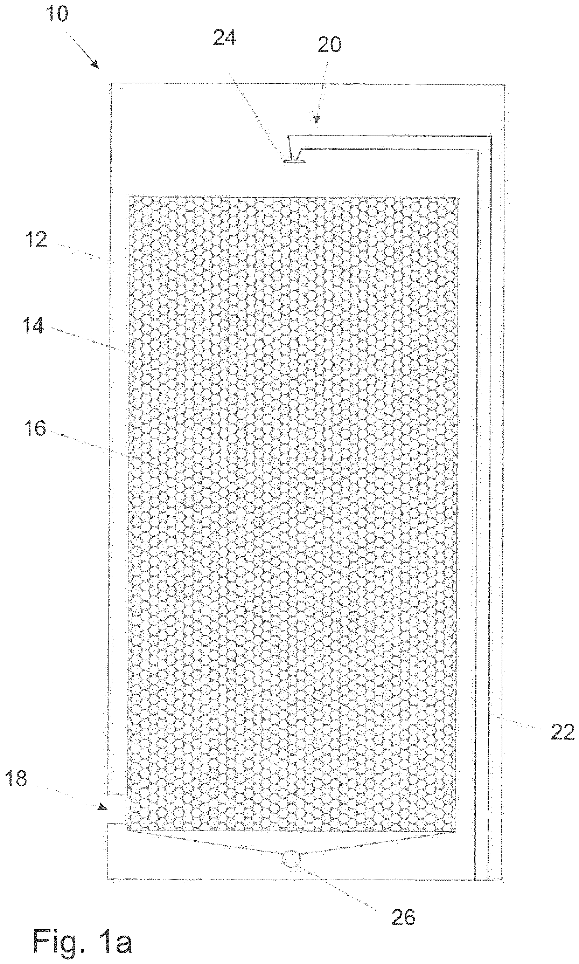

Die in Fig. 1a als vertikaler Schnitt dargestellte Verrieselungsvorrichtung 10 umfasst in bekannter Weise einen Behälter 12 mit einem im Behälter 12 angeordneten Tropfkörper 14. Behälter 12 und Tropfkörper 14 sind in der dargestellten Ausführungsform zylindrisch und säulenförmig ausgeführt. Der Tropfkörper 14 dient dazu, Wasser, insbesondere Abwasser oder Grauwasser, zu verrieseln, welches ihm auf seiner Oberseite zugeführt wird. Das Wasser rieselt dann durch den Tropfkörper 14 allmählich nach unten.

Der Tropfkörper 14 hat zu diesem Zweck einen speziellen Aufbau. Er umfasst eine Vielzahl einzelner Elemente, sogenannter Tropfkörperelemente 16, die aufgeschüttet sind und somit in ihrer Gesamtheit eine lose Schüttung bilden. Diese ist hier lediglich schematisch dargestellt.

Der Tropfkörper 14 und der Behälter 12 sind durch eine seitliche Revisionsöffnung 18 im unteren Bereich des Mantels des zylindrischen Behälters 12 zugänglich, um beispielsweise den Zustand der Tropfkörperelemente 16 zu kontrollieren oder diese auszutauschen.

Weiter umfasst die Vorrichtung 10 Beschickungsmittel 20. Diese sind zur Beschickung des Behälters 12 und des Tropfkörpers 14 mit Wasser ausgeführt und umfassen eine Zuleitung 22, die entlang der Behälterwand nach oben führt, und einen Verteiler 24 am Ende der Zuleitung 22, welcher zentral über dem Tropfkörper 14 angeordnet ist. Der Verteiler 24 ist in der in Fig. 1a dargestellten Ausführungsform als Sprühverteiler ausgeführt. Die Zuleitung 22 kann dabei mit einer hier nicht dargestellten Pumpe versehen sein oder an ein bestehendes Wasser- oder Abwassersystem angeschlossen und durch dieses gespeist werden. Weiterhin umfasst die Vorrichtung 10 einen Ablauf 26 unterhalb des Tropfkörpers 14, der das unten aus dem Tropfkörper 14 austretende Wasser aufnimmt. Der Volumenstrom kann durch eine im Ablauf 26 angeordnete Drossel gedrosselt sein, in einem einfachen Fall durch eine verkleinerte Durchflussöffnung. Alternativ oder zusätzlich kann der Volumenstrom durch den Ablauf 26 steuerbar sein, etwa durch ein Ventil, das auch vollständig verschließbar sein kann. Auf diese Weise kann ein im Behälter 12 bzw. in der Schüttung enthaltenes Flüssigkeitsvolumen zurückgehalten werden. So erhält man eine steuerbare Pufferfunktion. Hierdurch lässt sich auch ein Reinigungseffekt der Schüttung bzw. der darin enthaltenen Tropfkörperelemente 16 erzielen, da Verunreinigungen, die in der Schüttung enthalten sind, in einem aufgestauten Wasservolumen leichter lösbar sind und anschließend durch den Ablauf 26 ausgespült werden können. Dies kann auch im Zusammenhang mit einer Druckspülung erfolgen.

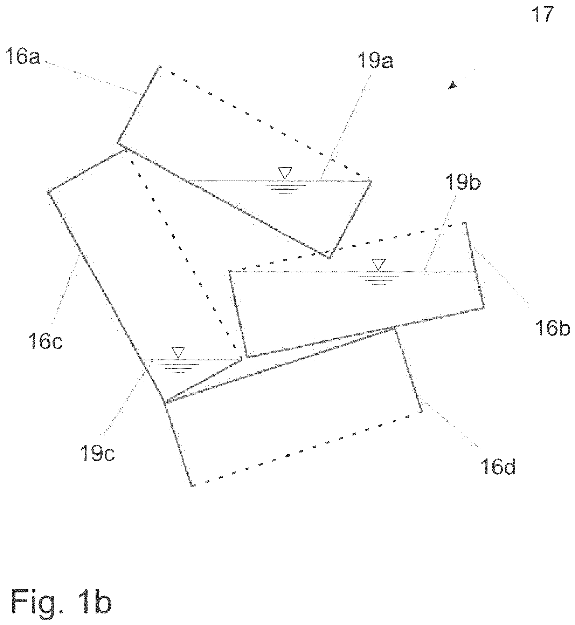

Der Sprühverteiler 24 verteilt ein Wasser oder Abwasservolumen über der Oberseite des Tropfkörpers 14 und damit über die Tropfkörperelemente 16. Das Wasser verrieselt über und durch die Tropfkörperelemente 16 und durchströmt dabei den Tropfkörper 14. Aufgrund der Schüttung der Tropfkörperelemente 16 sind diese innerhalb der Schüttung, abweichend von den Darstellungen in Fig. 1, nicht gleichförmig orientiert, sondern zufällig ausgerichtet. Erfindungsgemäß handelt es sich bei den Tropfkörperelementen 16 um zumindest einseitig offene Gefäße, die beispielsweise becher- oder schalenförmig ausgeführt sein können. Hierfür sollen später noch spezifische Ausführungsbeispiele angeführt werden. Aufgrund der zufälligen Ausrichtung existiert innerhalb der Schüttung stets ein Anteil an Tropfkörperelementen 16, deren freie Öffnung vertikal oder schräg nach oben offen ist, so dass diese Tropfkörperelemente 16 nach oben offene Behälter darstellen. Diese Behälter bilden innerhalb der Schüttung kleine Speichervolumina, in denen sich das verrieselte Wasser sammeln kann, bis es verdunstet oder von einem weiteren Wasservolumen verdrängt wird. Hierdurch wird eine Pufferfunktion der Vorrichtung 10 geschaffen, welche somit als Zwischenspeicher z.B. für plötzlich auftretende Regenwasser- oder Abwassermengen dienen kann. Der Verdunstungseffekt kann wiederum dazu genutzt werden, um das Mikroklima in der Umgebung der Vorrichtung 10 positiv zu regulieren. Ein Abwasserreinigungseffekt kann durch Mikroorganismen erzielt werden, die auf oder in den Tropfkörperelementen 16 aufwachsen. Dieser Effekt kann durch die in einem Teil der Tropfkörperelemente 16 gesammelten Wasservolumina gefördert werden, welche insbesondere ein Trockenfallen des Tropfkörpers 14 in Phasen, in denen keine Beschickung mit Wasser stattfindet, verhindert.

Dieses Funktionsprinzip der Schüttung von Tropfkörperelementen 16 soll anhand der schematischen Fig. 1b erläutert werden, welche einen vergrößerten Ausschnitt der Schüttung zeigt. Beispielhaft sind hier vier Tropfkörperelemente 16a, 16b, 16c und 16d dargestellt, die lose aufeinanderliegen. Die Tropfkörperelemente 16a, 16b, 16c und 16d sind im vorliegenden Fall identisch ausgebildet. Sie weisen jeweils die Form eines zylindrischen Bechers auf, wobei eine Stirnseite des Zylinders offen ist, die Mantelfläche und der Boden (d. h. die gegenüberliegende Stirnseite) jedoch geschlossen sind. Drei dieser Tropfkörperelemente, nämlich diejenigen mit den Bezugszeichen 16a, 16b und 16c, sind innerhalb dieser Schüttung so ausgerichtet, dass ihre geöffnete Seite (in Fig. 1b durch eine Strichlinie markiert) nach oben oder schräg nach oben gerichtet ist, so dass jedes dieser Tropfkörperelemente 16a, 16b und 16c senkrecht von oben betrachtet einen freien Öffnungsquerschnitt aufweist. Wasser, das von oben durch den Tropfkörper 14 rieselt, kann sich in den derart orientierten Tropfkörperelementen 16a, 16b und 16c sammeln und dort stehende Wasservolumina 19a, 19b und 19c bilden. Aus diesen Wasservolumina 19a, 19b und 19c überströmendes Wasser kann sich in einem jeweils darunter angeordneten Tropfkörperelement sammeln. Läuft beispielsweise das in Fig. 1b oberste Tropfkörperelement 16a über, strömt das überlaufende Wasser in das darunter gelegene Tropfkörperelement 16b, und daraus wiederum in das daneben liegende Tropfkörperelement 16c, und so fort. Das unterste Tropfkörperelement 16d ist hingegen so orientiert, dass seine Öffnung schräg nach unten weist und es somit von oben her betrachtet keinen freien Öffnungsquerschnitt aufweist.

In der Praxis wird die Ausrichtung der Tropfkörperelemente 16 innerhalb der Schüttung rein zufällig sein, d. h., es wird ein Anteil von Tropfkörperelementen 16 vorhanden sein, der so ausgerichtet ist wie die hier dargestellte Tropfkörperelemente 16a, 16b und 16c, so dass sich Wasser darin sammeln kann, bis es überläuft, während der verbleibende Anteil von Tropfkörperelementen kein Wasser aufnehmen kann. Innerhalb der Wasservolumina 19a, 19b und 19c können sich Mikroorganismen ansiedeln, die das Wasser bzw. Abwasser biologisch klären. In ihrer Gesamtheit bilden die in Fig. 1b beispielhaft dargestellten Wasservolumina 19a, 19b und 19c das oben bereits hinlänglich beschriebene Puffervolumen. Mikroorganismen können sich im Übrigen auch außen auf den Tropfkörperelementen 16a, 16b, 16c und 16d ansiedeln, und zwar unabhängig von deren räumlicher Ausrichtung.

Die Tropfkörperelemente 16a, 16b und 16c bilden keine dichte Packung, in der sie eng aneinander liegen, sondern bilden Zwischenräume, durch welche die Schüttung insgesamt einen gewissermaßen "porösen" Tropfkörper 14 bildet.

In der vorliegenden Ausführungsform besteht die Schüttung ausschließlich aus zumindest einseitig offenen Gefäßen. Es sind ferner Ausführungsformen denkbar, in denen die Schüttung des Tropfkörpers 14 nicht ausschließlich Tropfkörperelemente 16a, 16b und 16c der hier dargestellten Art umfasst, welche als zumindest einseitig offene Gefäße ausgebildet sind, sondern zusätzlich anders geformte Tropfkörper bekannter Art, und/oder Zuschlag- oder Zusatzstoffe. Diese können insbesondere eine Funktion in einem Prozess zur Abwasserklärung haben. Denkbar ist beispielsweise die Verwendung von Zusatzstoffen, die durch Oxidation Metallionen freisetzen, wie z.B. Eisen-oder Aluminiumspänen zur Phosphatausfällung. Als weiterer Zusatzstoff ist Kalkstein zur Anhebung des pH-Werts geeignet.

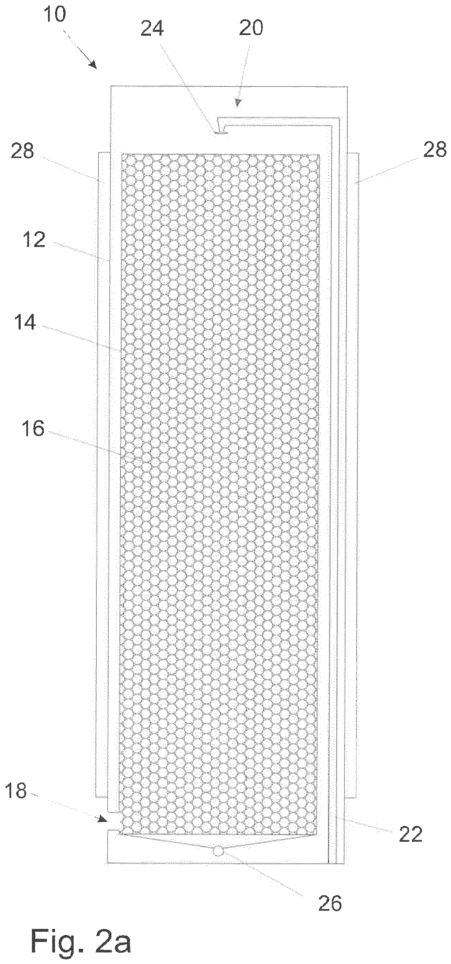

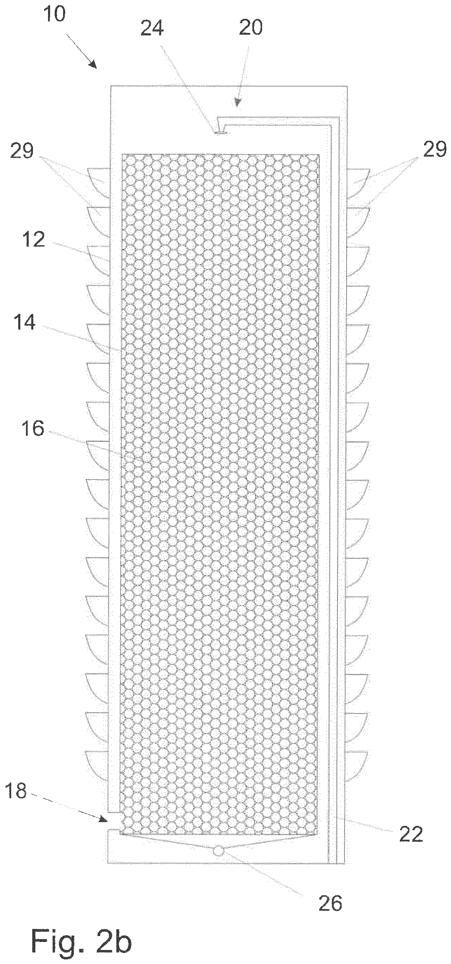

Fig. 2a und 2b zeigen erweiterte Varianten der Verrieselungsvorrichtung 10 nach Fig.l, weiter umfassend eine Anzahl von Pflanzenträgern 28, 29. Diese sind in Fig. 2a als Pflanzmatten 28 ausgeführt. Diese können zum Beispiel Hanfmatten mit einer Dicke von ca. 10 cm sein, die an der Außenseite des Behälters 12 befestigt werden und diesen zumindest teilweise ummanteln. In Fig. 2b sind die Pflanzenträger als taschenförmige Aufnahmen 29 ausgebildet. Diese Aufnahmen können ein Pflanzensubstrat aufnehmen. Die Pflanzmatten 28 und/oder Aufnahmen 29 können dann mit standort-und anwendungsspezifischen Pflanzen bepflanzt werden. Pflanzmatten 28 und Aufnahmen 29 können zu gemeinsamen Pflanzenträgern kombiniert werden.

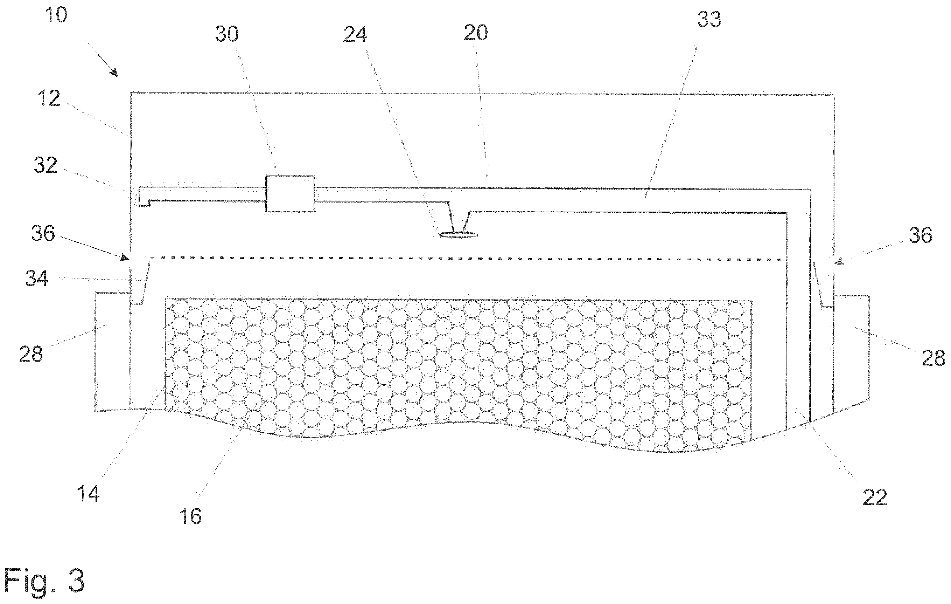

Fig. 3 zeigt einen vertikalen Schnitt durch das obere Ende einer Verrieselungsvorrichtung 10. Dabei entspricht diese im wesentlichen der in Fig. 2a dargestellten Ausführungsform, wobei die Beschickungsmittel 20des weiteren einen Verteiler 30 umfassen. Dieser ist ausgeführt, um das zugeführte Wasser- oder Abwasservolumen zwischen dem Sprühverteiler 24 und einem Zulauf 32 aufzuteilen. Der Verteiler 30 ist zu diesem Zweck in einem Querrohr 33 angeordnet, dass sich an das obere Ende der Zuleitung 22 anschließt und sich horizontal quer über den Tropfkörper 14 bis zu dem Zulauf 32 erstreckt. Etwa auf der Hälfte der Länge des Querrohrs 33 zweigt der Sprühverteiler 24 vom Querrohr 33 ab, während der Verteiler 30 zwischen dem Abzweig zum Sprühverteiler 24 und dem Zulauf 32 am Ende des Querrohrs 33 angeordnet ist.

Der Verteiler 30 umfasst ein Ventil zur Steuerung des Durchflusses zum Zulauf 32. Hierbei beschickt der Sprühverteiler 24 nur den Tropfkörper 14 und der Zulauf 32 einer auf der Innenseite des Behälters 12 angeordnete Rinne 34. Diese erstreckt sich horizontal kreisförmig um die gesamte Innenwand des Behälters 12 herum. Somit verteilt sich ein durch den Zulauf 32 in die Rinne 34 einströmendes Wasservolumen gleichmäßig entlang der gesamten Rinne 34. Sobald der Füllstand der Rinne 34 ein bestimmtes, durch im Mantel des Behälters 12 angeordnete Öffnungen 36 vorgegebenes Niveau erreicht, strömt das Wasser durch diese Öffnungen 36 hindurch aus dem Behälter 12 heraus und auf und in die Pflanzenträger. Diese sind hier als Pflanzmatten 28 ausgeführt, umfassen aber gegebenenfalls auch Aufnahmen 29 für Pflanzsubstrate, ähnlich wie in Fig. 2b gezeigt.

Somit teilt der Verteiler 30 die Beschickung des Behälters 12 zwischen dem Tropfkörper 14 und dem oder den Pflanzenträgern 28, 29 auf. Dadurch lässt sich für die in den Pflanzenträgern 28, 29 angewachsenen Pflanzen und die auf den Tropfkörperelementen 16 aufgewachsenen sessilen Mikroorganismen die jeweils geeignete Menge zuführen. Auch die Effektivität der Klimaregulation oder Abwasserreinigung, sowie die Pufferfunktion der Vorrichtung lässt sich hiermit steuern.

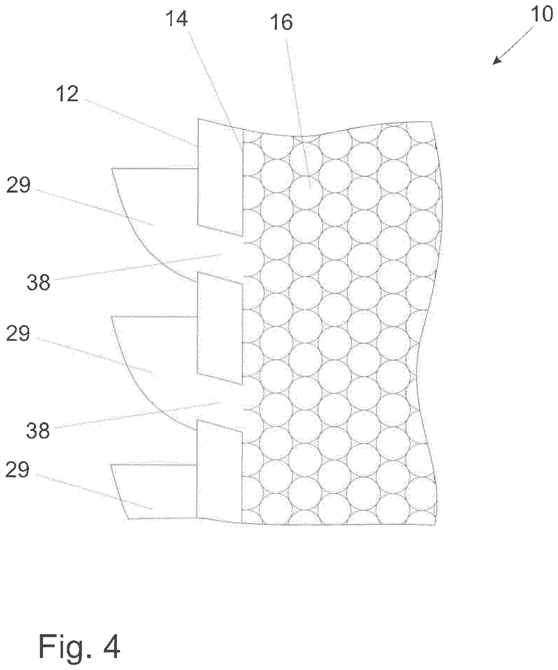

In Fig. 4 ist ein Ausschnitt eines vertikalen Schnittes durch eine erfindungsgemäße Ausführungsform der Verrieselungsvorrichtung 10. Diese entspricht dabei der in Fig. 2b dargestellten Ausführungsform, wobei der Behälter 12 Öffnungen in seinem Außenmantel umfasst, die Durchlässe 38 zum Tropfkörper 14 bilden. Letzterer ist aufgrund der losen Schüttung der Tropfkörperelemente 16 ohnehin seitlich offen und gewissermaßen porös, wobei die "Poren" durch die Zwischenräume zwischen den Tropfkörperelementen 16 gebildet werden. Derartige Öffnungen können zur Belüftung des Tropfkörpers 14 vorteilhaft sein. Denkbar ist beispielsweise auch, Belüftungsöffnungen am unteren Bereich des Mantels des Behälters 12 (beispielsweise unterhalb der Revisionsöffnung 18 in Fig. 1a, 2a und 2b) vorzusehen, so dass Außenluft seitlich in den Behälter 12 und von unten in den Tropfkörper 14 eindringen kann. Geeignete mikroklimatische Verhältnisse vorausgesetzt, kann hierdurch ein Kamineffekt durch einen aufsteigenden Luftstrom innerhalb des Behälters 12 erzeugt werden.

Durch die Durchlässe 38 stehen die Pflanzenträger 28 mit dem Tropfkörperinneren in Verbindung. Hierdurch können in den Pflanzenträgern 29 angesiedelte Pflanzen mit ihren Wurzeln durch die Durchlässe 38 in die Tropfkörperelemente 16 einwachsen und das im Tropfkörper 14 strömende oder das durch die Tropfkörperelemente 16 gespeicherte Wasser nutzen. Dies ermöglicht eine Verwendung von Pflanzenträgern auch ohne den in Fig. 3 dargestellten Verteiler 30 und die weiteren Beschickungsmittel für die Pflanzenträger 29. Dadurch kann diese Ausführungsform auch in Regionen oder an Orten eingesetzt, wo auf die Außenseite des Behälters 12 regnendes Regenwasser nicht ausreicht, um die Pflanzenträger 29 dauerhaft mit Pflanzen zu besiedeln. Selbstverständlich lässt sich die hier dargestellte Ausführungsform auch mit der in Fig. 3 dargestellten Ausführungsform kombinieren. Die Pflanzenträger sind in Fig. 4 als Aufnahmen 29 dargestellt, aber keineswegs darauf beschränkt, sie umfassen auch alle anderen hier offenbarten oder andersartigen Pflanzenträger.

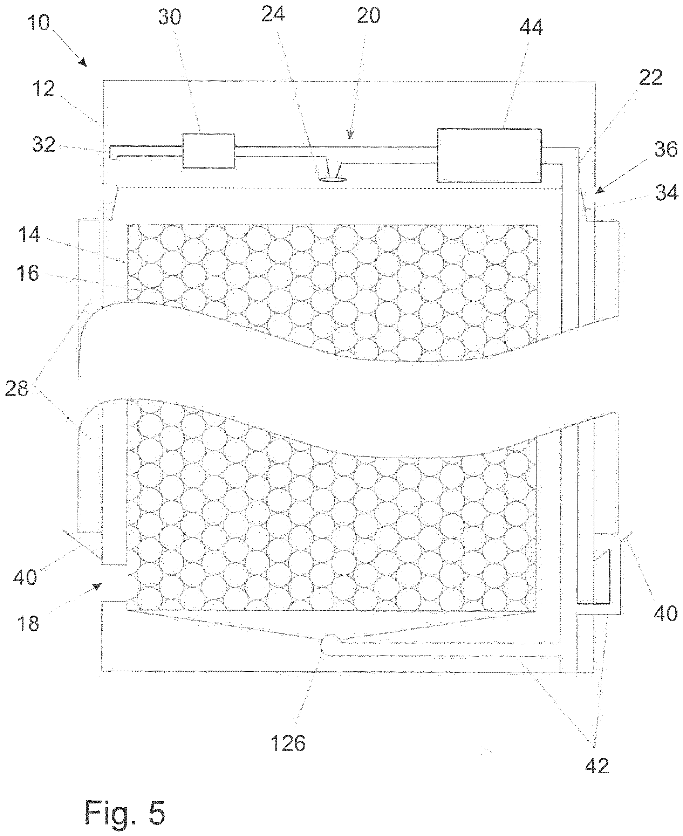

Fig. 5 zeigt einen vertikalen Schnitt durch den oberen und unteren Abschnitt einer Verrieselungsvorrichtung 10. Diese entspricht der in Fig. 3 dargestellten Ausführungsform, wobei der Behälter 12 weiter eine außenliegende und sich horizontal kreisförmig um den Mantel des Behälters 12 herum erstreckende Rinne 40 umfasst. Diese ist unterhalb der Pflanzenträger angeordnet, die hier als Pflanzmatten 28 dargestellt sind. Die Rinne 40 sammelt durch die Pflanzmatten 28 gesickertes und unten aus diesen austretendes Wasser. An die Rinne 40 und den Ablauf 126 des Tropfkörpers 14, dessen Anordnung und Funktion dem Ablauf 26 aus Fig. 1, 2a und 2b entspricht, schließt sich dabei jeweils ein Zulauf 42 an. Diese Zuläufe 42 münden wiederum in die Zuleitung 22 der Beschickungsmittel 20. Mit Hilfe einer innerhalb des sich oben an die Zuleitung 22 anschließenden Querrohrs 33 angeordneten Pumpe 44 kann das durch Tropfkörper 14 und Pflanzenträger 28 geströmte Wasser denselben wieder zugeführt werden, d.h. es wird eine Rezirkulation erreicht. Der Trichter 40 und der Ablauf 126 sowie die Zuläufe 42 bilden daher Rezirkulationsmittel. Obwohl hier nicht dargestellt, können diese weiter Abläufe umfassen, um nicht zwangsweise sämtliches ablaufendes Wasser in den Tropfkörper 14 und die Pflanzenträger 28 zurückführen zu müssen, sondern nur einen Teil desselben rückzuführen und den übrigen Teil abzuzweigen. Dadurch ist die Rezirkulation flexibel einsetzbar, zum Beispiel zum Erhalt einer ausreichenden Klimaregulation bei geringer Wasserverfügbarkeit. Die Pflanzenträger können dabei als alle weiteren offenbarten Pflanzenträger ausgebildet sein und die Rezirkulationsmittel lassen sich auch mit den anderen offenbarten Ausführungsformen kombinieren. Ferner schließt der hier beschriebene Rezirkulationsbetrieb nicht aus, dass über ein unteres Ende der Zuleitung 22 zusätzlich Wasser in die Beschickungsmittel 20 eingespeist wird.

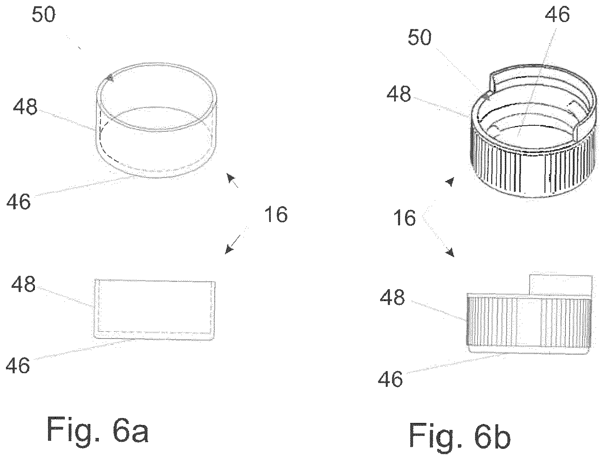

Beispiele für Tropfkörperelemente 16 sind in den Fig. 6a und 6b dargestellt. Fig. 6a zeigt ein zylindrisches, becherförmiges Tropfkörperelement 16. Dieses umfasst einen Boden 46, der das den Becher nach unten hin abschließt, eine Seitenwand 48, die einen zylindrischen Mantel bildet, und oben eine Öffnung 50. Dabei ist der Durchmesser des Tropfkörperelements 16 deutlich größer als die Höhe. Dieses Tropfkörperelement 16 kann beispielsweise ein in Fig. 6b dargestellter recycelter Flaschendeckel aus Kunststoff sein. Dieser entspricht im Wesentlichen dem in Fig. 6a dargestellten Element, umfasst aber weiterhin eine durch Längsrippen profilierte Außenseite sowie eine profilierte Innenseite der Seitenwand 48. Diese Profilierungen ergeben sich aus der Griffprofilierung der Außenseite und dem Schraubgewinde der Innenseite des Flaschendeckels. Dabei kann dieser beispielsweise eine PCO28 Flaschendeckel sein ("plastic cap only" mit einem Innendurchmesser von 28 mm). Solche Flaschendeckel sind weltweit in Gebrauch und stehen am Ort der Installation der Verrieselungsvorrichtung 10 zur Verfügung. Somit fallen für die Schüttung des Tropfkörpers 12 geringe Material- und Transportkosten sowie Transportwege an, was zur Nachhaltigkeit und Rentabilität der Verrieselungsvorrichtung 10 beiträgt.

Generell sind auch andere Formen von Tropfkörperelementen 16 verwendbar, abweichend von einer im wesentlichen zylindrischen Becherform, wie oben dargestellt, auch schalenförmige Tropfkörperelemente 16, z.B. mit einem abgerundeten oder konkav ausgehöhlten Boden. Sowohl rotationssymmetrische als auch nicht rotationssymmetrische Formen sind denkbar. Grundsätzlich ist nicht ausgeschlossen, dass das Tropfkörperelement 16 zumindest an einer weiteren Seite eine oder auch mehrere Öffnungen aufweist, in dem in den Fig. 6a und 6b gezeigten Ausführungsformen etwa seitliche Öffnungen im Zylindermantel des Bechers. Es muss jedoch gewährleistet sein, dass das Tropfkörperelement 16 zumindest in einer räumlichen Ausrichtung ein Flüssigkeitsvolumen speichern kann und somit ein Gefäß bildet, in dem sich das durch den Tropfkörper 14 riesende Wasser sammeln kann, wie oben beschrieben. Durch die geometrische Form und die Anzahl und Anordnung der Öffnungen lässt sich steuern, wie groß der Anteil der Tropfkörperelemente 16 ist, die in einer räumlichen Zufallsverteilung innerhalb des Tropfkörpers 14 als Gefäß wirken, und wie groß das hierdurch gebildete Speichervolumen insgesamt ist.

Der Durchmesser der Tropfkörperelemente 16 kann beispielsweise zwischen 15 und 60 mm liegen. Sie sind somit - vor allem in Relation zum gesamten Behältervolumen-relativ klein, so dass man sie auch als Mikrobehälter bezeichnen kann. Die Höhe (senkrecht zur Richtung des Durchmessers) kann - in Kombination mit diesem Höhenbereich oder auch unabhängig davon - zwischen 5 und 40 mm liegen. Weiter bevorzugt weisen sie einen Zylinderdurchmesser zwischen 20 und 40 mm und/oder eine Höhe zwischen 10 und 30 mm auf, weiter bevorzugt einen Durchmesser zwischen 28 und 35 mm und/oder eine Höhe zwischen 13 und 25 mm.

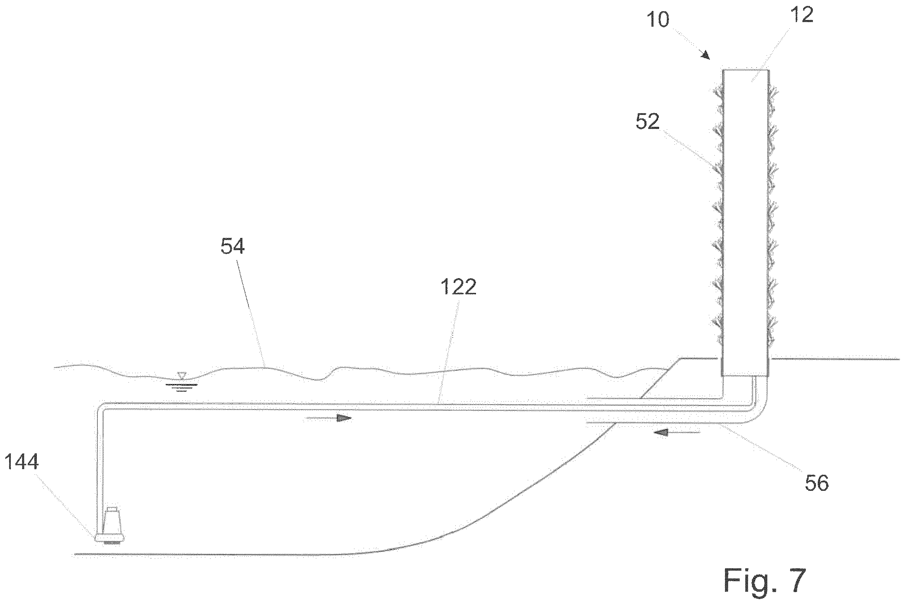

Eine Einsatzsituation der erfindungsgemäßen Verrieselungsvorrichtung 10 ist in Abb. 7 dargestellt. Hierbei ist der Behälter 12 der Verrieselungsvorrichtung 10, genauer gesagt die hier nicht dargestellten Pflanzenträger mit Pflanzen 52 bewachsen. Die Vorrichtung entspricht dabei einer der in Fig. 2a, 2b, 3, 4 und 5 dargestellten Ausführungsformen. Die Vorrichtung 10 ist in der Nähe eines Gewässers 54 angeordnet. Die Beschickungsmittel umfassen hierbei eine Zuleitung 122, welche sich in das Gewässer 54 erstreckt und an eine Pumpe 144 angeschlossen ist. Das entgegengesetzte Ende der Zuleitung 122 schließt sich auf nicht näher gezeigte Weise an die vertikale Zuleitung 22 aus den Fig. 2a, 2b, 3, 4 und 5 an. Durch diese kann Wasser aus dem Gewässer 54 in den Behälter 12 gepumpt werden, wobei nach einer der vorher gezeigten Ausführungsformen der Tropfkörper 14 und/oder die Pflanzenträger 28, 29 beschickt werden. Wasser, das durch den Tropfkörper 14 und/oder die Pflanzenträger 28, 29 geströmt ist, wird durch einen Ablauf 56 am bzw. unter dem Tropfkörper 14 wieder in das Gewässer 54 zurückgeführt. Dieses kann beispielsweise ein Gartenteich, ein Fluss oder ein Regenwasserrückhaltebecken sein. Je nach Verwendungszweck der Anlage wird das Gewässer 54 durch die Verrieselungsvorrichtung 10 gereinigt, das Wasser zur Klimaregulation benutzt, die Vorrichtung als Puffer genutzt oder eine beliebige Kombination dieser Einsatzzwecke genutzt.

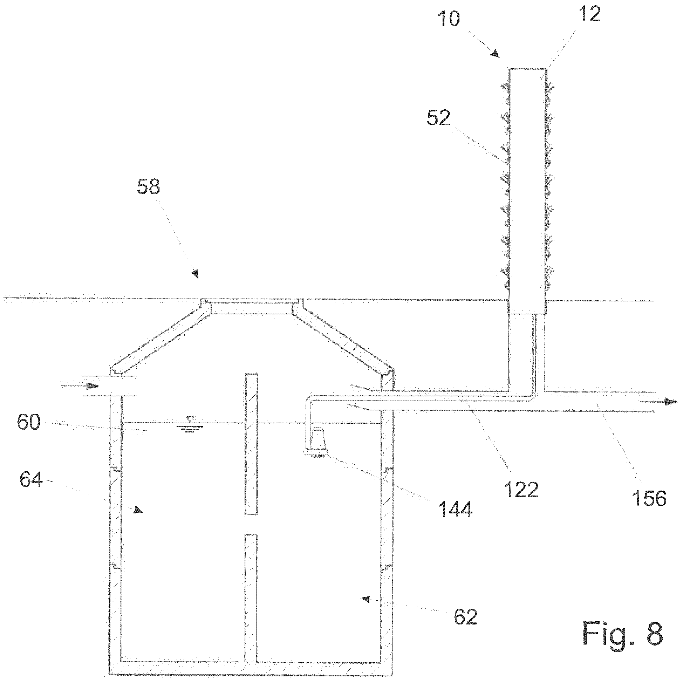

Fig. 8 zeigt eine Klärvorrichtung, innerhalb welcher die erfindungsgemäße Verrieselungsvorrichtung 10 als nachgeschaltete Klärstufe eingesetzt wird. Hierbei ist die Verrieselungsvorrichtung 10, welche der Fig. 7 dargestellten Ausführungsform entspricht, in der Nähe eines Klärbehälters 58 der Klärvorrichtung angeordnet. Dieser umfasst zwei vorgeschaltete Klärstufen 60 und 62 und ein Abwasservolumen 64. Der Behälter 12 wird durch die Pumpe 144 und die Zuleitung 122 mit dem vorgereinigten Abwasser 64 beschickt, so dass die Verrieselungsvorrichtung 10 als nachgeschaltete Klärstufe dient. Das gereinigte Abwasser wird durch einen Ablauf 156 weiter zur weiteren Verwendung oder Behandlung abgeführt.

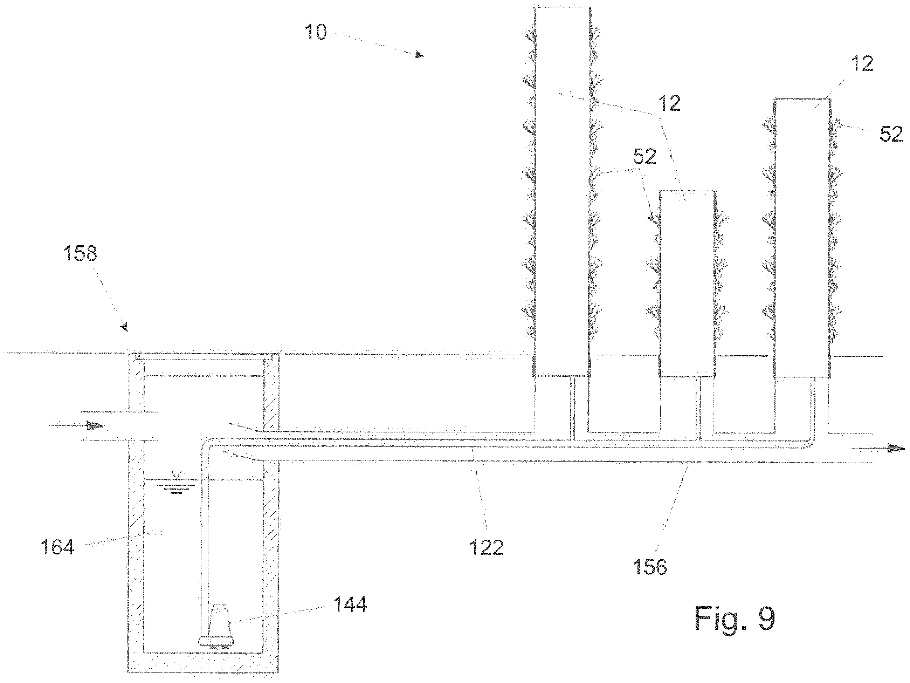

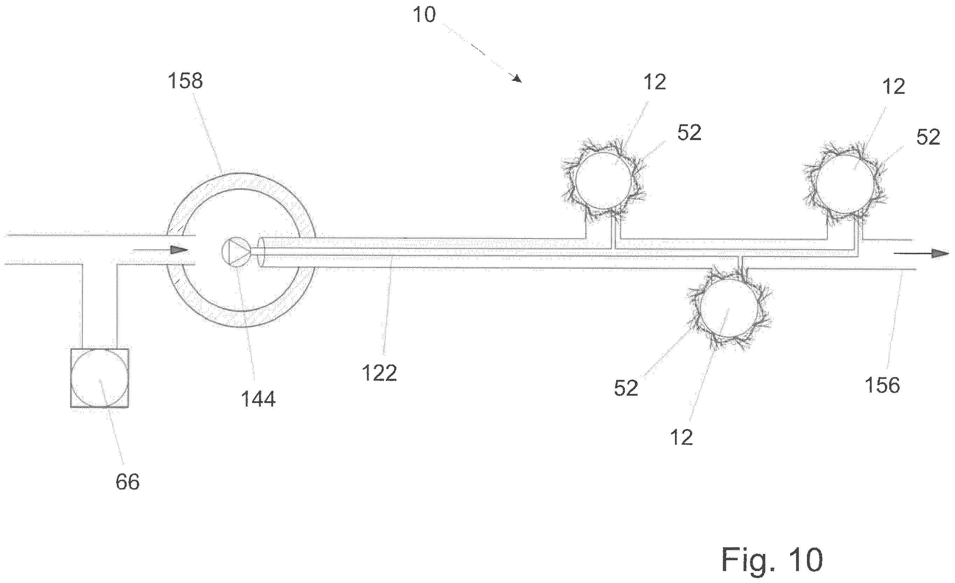

Eine weitere Einsatzsituation der Verrieselungsvorrichtung 10 ist in Fig. 9 und Fig. 10 dargestellt. Hierbei umfasst die Vorrichtung 10 drei separate Behälter 12 mit aufgewachsenen Pflanzen 52, von denen jeder einzelne wie der Behälter 12 in Fig. 8 ausgebildet ist. Die Vorrichtung 10 ist wie in Fig. 8 über eine Zuleitung 122 an eine Pumpe 144 angeschlossen und wird durch diese mit Wasser beschickt. Die Pumpe 144 ist dabei in einem Wasserbehälter 158 angeordnet. Dieser Wasserbehälter 158 ist Bestandteil eines Kanalisationssystems für Regenwasser. Dieses umfasst den in Fig. 10 dargestellten Straßenablauf 66 und führt dem Behälter 158 Oberflächenwasser zu. Bei einem Einsatz der Vorrichtung 10 als Puffer wird vor oder bei einem Überlaufen des Behälters 158 in den Ablauf 156 Wasser in die Behälter 12 gepumpt. Durch die zuvor beschriebene, langsame Durchströmgeschwindigkeit des Wassers durch den Tropfkörper 14 sowie durch das Puffervolumen der Tropfkörperelemente 16 gelangt das Wasser mit einer Zeitverzögerung und reduziertem Volumen in den Ablauf 156. So kann zum Beispiel bei einem Starkregenereignis das durch das Kanalisationssystem abzuführende Wasservolumen abgepuffert werden. Selbstverständlich lässt sich die in Fig. 9 und 10 dargestellte Ausführungsform auch zu allen weiteren offenbarten Zwecken nutzen.

In allen dargestellten Ausführungsformen kann es optional möglich sein, den Tropfkörper 14 durch eine Druckspülung zu reinigen, etwa durch einen Druckbetrieb der Pumpe 44 der Ausführungsform in Fig. 5 bei geschlossenem Ventil des Verteilers 30. Zur weiteren Steigerung der Nachhaltigkeit des Betriebs der jeweiligen Verrieselungsvorrichtung 10 können deren Einrichtungen, die mit elektrischer Energie versorgt werden müssen, wie z.B. die vorstehend erwähnte Pumpe 22, durch eine regenerative Energiequelle gespeist werden, die in die Verrieselungsvorrichtung 10 integriert ist, wie z.B. eine auf dieser angeordnete Photovoltaikanlage.

## Patentansprüche

1. Verrieselungsvorrichtung (10) für Wasser, umfassend mindestens einen Behälter (12), der einen Tropfkörper (14) enthält, der eine Schüttung (17) umfasst, die eine Vielzahl von Tropfkörperelementen (16, 16a, 16b, 16c) enthält,
**dadurch gekennzeichnet, dass** die Schüttung (17) Tropfkörperelemente (16, 16a, 16b, 16c) enthält, die als zumindest einseitig offene Gefäße ausgebildet sind.

2. Verrieselungsvorrichtung nach Anspruch 1, **dadurch gekennzeichnet, dass** die Tropfkörperelemente (16, 16a, 16b, 16c) becherförmig oder schalenförmig ausführt sind.

3. Verrieselungsvorrichtung nach Anspruch 1 oder 2, **dadurch gekennzeichnet, dass** die Tropfkörperelemente (16, 16a, 16b, 16c) Flaschendeckel sind.

4. Verrieselungsvorrichtung nach einem der vorstehenden Ansprüche, **dadurch gekennzeichnet, dass** die Tropfkörperelemente (16, 16a, 16b, 16c) einen Durchmesser zwischen 15 und 60 mm und eine Höhe zwischen 5 und 40 mm aufweisen.

5. Verrieselungsvorrichtung nach einem der vorstehenden Ansprüche, **dadurch gekennzeichnet, dass** die Tropfkörperelemente (16, 16a, 16b, 16c) eine zumindest einseitig profilierte Außenseite aufweisen.

6. Verrieselungsvorrichtung nach einem der vorstehenden Ansprüche, **dadurch gekennzeichnet, dass** der Behälter (12) auf seiner Außenseite eine Anzahl von Pflanzenträgern (28, 29) umfasst.

7. Verrieselungsvorrichtung nach Anspruch 6, **dadurch gekennzeichnet, dass** die Pflanzenträger (28, 29) zumindest eine Pflanzmatte (28) und/oder eine Anzahl von Aufnahmen (29) für Pflanzsubstrate umfassen.

8. Verrieselungsvorrichtung nach einem der vorstehenden Ansprüche, **dadurch gekennzeichnet, dass** die Vorrichtung (10) Mittel zur Beschickung des Behälters (20) mit einem Wasservolumen umfasst.

9. Verrieselungsvorrichtung nach Anspruch 8 in Verbindung mit Anspruch 6 oder 7, **dadurch gekennzeichnet, dass** die Vorrichtung (10) weiter einen Verteiler (30) umfasst, der ausgeführt ist, um die Beschickung des Behälters (12) zwischen dem Tropfkörper (14) und dem oder den Pflanzenträgern (28, 29) aufzuteilen.

10. Verrieselungsvorrichtung nach einem der Ansprüche 8 oder 9, **dadurch gekennzeichnet, dass** die Mittel zur Beschickung des Behälters (20) Rezirkulationsmittel (40, 42, 126) umfassen, ausgeführt, um eine Rezirkulation des Wasservolumens durch den Behälter (12) zu ermöglichen.

11. Verrieselungsvorrichtung nach einem der vorstehenden Ansprüche, **dadurch gekennzeichnet, dass** die Schüttung (17) Zusatzstoffe umfasst.

12. Verrieselungsvorrichtung nach Anspruch 11, **dadurch gekennzeichnet, dass** die Zusatzstoffe durch Oxidation Metallionen freisetzen.

13. Verrieselungsvorrichtung nach einem der vorstehenden Ansprüche, **dadurch gekennzeichnet, dass** der Behälter (12) säulenförmig ist.

14. Eine Klärvorrichtung zur Reinigung eines Abwasservolumens (64), umfassend Einrichtungen zur Förderung oder Behandlung des Abwassers, mindestens eine vorgeschalteten Klärstufe (60, 62) und eine nachgeschaltete Klärstufe, **dadurch gekennzeichnet, dass** die nachgeschaltete Klärstufe eine Verrieselungsvorrichtung (10) nach einem der Ansprüche 1 bis 12 ist.

## Geänderte Patentansprüche

### Geänderte Patentansprüche gemäss Regel 137(2) EPÜ.

1. Verrieselungsvorrichtung (10) für Wasser, umfassend mindestens einen Behälter (12), der einen Tropfkörper (14) enthält, der eine Schüttung (17) umfasst, die eine Vielzahl von Tropfkörperelementen (16, 16a, 16b, 16c) enthält,
wobei die Schüttung (17) Tropfkörperelemente (16, 16a, 16b, 16c) enthält, die als zumindest einseitig offene Gefäße ausgebildet sind,
**dadurch gekennzeichnet, dass**
der Behälter (12) auf seiner Außenseite eine Anzahl von Pflanzenträgern (28, 29) umfasst; dass die Vorrichtung (10) Mittel zur Beschickung des Behälters (20) mit einem Wasservolumen umfasst; und
dass die Vorrichtung (10) weiter einen Verteiler (30) umfasst, der ausgeführt ist, um die Beschickung des Behälters (12) zwischen dem Tropfkörper (14) und dem oder den Pflanzenträgern (28, 29) aufzuteilen.

2. Verrieselungsvorrichtung nach Anspruch 1, **dadurch gekennzeichnet, dass** der Verteiler (30) einen Sprühverteiler (24) umfasst, der ausgeführt ist, um den Tropfkörper (14) und/oder die Pflanzenträger (28, 29) zu beschicken.

3. Verrieselungsvorrichtung nach Anspruch 2, **dadurch gekennzeichnet, dass** der Verteiler (30) einen Zulauf (32) umfasst, der ausgeführt ist, um die Pflanzenträger (28, 29) zu beschicken.

4. Verrieselungsvorrichtung nach Anspruch 3, **dadurch gekennzeichnet, dass** der Verteiler (30) einen im Behälter (12) angeordneten Überlauf (34) umfasst, der ausgeführt ist, um die Pflanzenträger (28, 29) zu beschicken, wobei der Überlauf (34) durch den Zulauf (32) beschickt wird.

5. Verrieselungsvorrichtung nach Anspruch 3 oder 4, **dadurch gekennzeichnet, dass** der Verteiler (30) ein Ventil zur Steuerung des Durchflusses zum Zulauf (32) umfasst.

6. Verrieselungsvorrichtung nach einem der vorstehenden Ansprüche, **dadurch gekennzeichnet, dass** die Tropfkörperelemente (16, 16a, 16b, 16c) becherförmig oder schalenförmig ausführt sind.

7. Verrieselungsvorrichtung nach einem der vorstehenden Ansprüche, **dadurch gekennzeichnet, dass** die Tropfkörperelemente (16, 16a, 16b, 16c) Flaschendeckel sind.

8. Verrieselungsvorrichtung nach einem der vorstehenden Ansprüche, **dadurch gekennzeichnet, dass** die Tropfkörperelemente (16, 16a, 16b, 16c) einen Durchmesser zwischen 15 und 60 mm und eine Höhe zwischen 5 und 40 mm aufweisen.

9. Verrieselungsvorrichtung nach einem der vorstehenden Ansprüche, **dadurch gekennzeichnet, dass** die Tropfkörperelemente (16, 16a, 16b, 16c) eine zumindest einseitig profilierte Außenseite aufweisen.

10. Verrieselungsvorrichtung nach einem der vorstehenden Ansprüche, **dadurch gekennzeichnet, dass** die Pflanzenträger (28, 29) zumindest eine Pflanzmatte (28) und/oder eine Anzahl von Aufnahmen (29) für Pflanzsubstrate umfassen.

11. Verrieselungsvorrichtung nach einem der vorstehenden Ansprüche, **dadurch gekennzeichnet, dass** die Mittel zur Beschickung des Behälters (20) Rezirkulationsmittel (40, 42, 126) umfassen, ausgeführt, um eine Rezirkulation des Wasservolumens durch den Behälter (12) zu ermöglichen.

12. Verrieselungsvorrichtung nach einem der vorstehenden Ansprüche, **dadurch gekennzeichnet, dass** die Schüttung (17) Zusatzstoffe umfasst.

13. Verrieselungsvorrichtung nach Anspruch 12, **dadurch gekennzeichnet, dass** die Zusatzstoffe durch Oxidation Metallionen freisetzen.

14. Verrieselungsvorrichtung nach einem der vorstehenden Ansprüche, **dadurch gekennzeichnet, dass** der Behälter (12) säulenförmig ist.

15. Eine Klärvorrichtung zur Reinigung eines Abwasservolumens (64), umfassend Einrichtungen zur Förderung oder Behandlung des Abwassers, mindestens eine vorgeschalteten Klärstufe (60, 62) und eine nachgeschaltete Klärstufe, **dadurch gekennzeichnet, dass** die nachgeschaltete Klärstufe eine Verrieselungsvorrichtung (10) nach einem der Ansprüche 1 bis 14 ist.
